# EUROPÄISCHE PATENTSCHRIFT

(11) **EP 3 916 306 B1**
(45) Veröffentlichungstag und Bekanntmachung des Hinweises auf die Patenterteilung: **15.01.2025**
(21) Anmeldenummer: 21169398.1
(22) Anmeldetag: 20.04.2021
(51) Int. Cl.: F24C 7/08, A47J 45/06

(54) **KOCHSYSTEM UND VERFAHREN ZUM BETREIBEN**
COOKING SYSTEM AND METHOD FOR OPERATING SAME
SYSTÈME DE CUISSON ET PROCÉDÉ DE FONCTIONNEMENT

(30) Priorität: 27.05.2020 DE 102020114129
(43) Veröffentlichungstag der Anmeldung: 01.12.2021
(73) Patentinhaber: Miele & Cie. KG, 33332 Gütersloh (DE)
(72) Erfinder: Müller, Christoph, 32289 Rödinghausen (DE); Boesch, Tobias, 32257 Bünde (DE); Gehring, Nils Marius, 33739 Bielefeld (DE); Ohrmann, Niels, 33332 Gütersloh (DE); Gey, Michael, 32130 Enger (DE)

(56) Entgegenhaltungen:
- WO-A1-2015/092230
- WO-A2-2004/008923
- DE-A1- 102012 216 719

## Beschreibung

Die vorliegende Erfindung betrifft ein Kochsystem umfassend wenigstens eine Kochfeldeinrichtung und wenigstens ein Kochgeschirr, wobei die Kochfeldeinrichtung wenigstens eine Aufstellfläche für das Kochgeschirr und wenigstens eine Heizeinrichtung zum Beheizen des Kochgeschirrs und wenigstens eine Steuereinrichtung aufweist. Die Kochfeldeinrichtung umfasst wenigstens eine Bedieneinrichtung und das Kochgeschirr umfasst wenigstens eine Bedieneinheit.

Beim modernen Kochen soll ein Benutzer einen Garprozess möglichst komfortabel steuern können und vorzugsweise auch durch Assistenzfunktionen bzw. Automatikprogramme unterstützt werden.

Modernes Kochgeschirr kann dazu je nach Ausgestaltung z. B. mit einem Kochfeld kommunizieren. So ist es unter anderem möglich, dass an einem Kochgeschirr eine Anzeige vorgesehen ist, welche die eingestellten Parameter für das Kochgeschirr oder auch andere Informationen anzeigt. Ein solches Kochsystem bestehend aus einem Kochgeschirr und einem Kochfeld ist beispielsweise in der EP 3 096 586 A1 offenbart. Die Anzeige von Informationen funktioniert zuverlässig. Die angezeigten Parameter können jedoch nur angezeigt und nicht verändert werden.

Zudem können auch Parameter zu einem Garprozess an einer externen Bedieneinheit vorgenommen werden, welche beispielsweise an dem Kochgeschirr angebracht oder in dieses integriert sein kann. Eine solche Bedieneinheit mit einer optionalen Anzeige zum Steuern eines Kochfeldes ist beispielsweise in der DE 10 2012 216 719 A1 gezeigt. Die Bedieneinheit wird z. B. an dem Griff einer Pfanne befestigt. Nachteilig ist jedoch, dass je nach Position und/oder Auslastung des Kochfeldes die Bedieneinheit nicht immer komfortabel zu erreichen und/oder zu bedienen ist. Z. B. wenn ein anderer Topf vor der Bedieneinheit steht und aus dem anderen Topf Dampf aufsteigt, kann die Bedienung über die Bedieneinheit unangenehm oder sogar gefährlich sein.

WO 2015/092230 A1 offenbart eine Kochfeldeinrichtung und ein Kochgeschirr, wobei das Kochgeschirr eine bidirektionale Kommunikationseinrichtung umfasst. Es besteht somit Bedarf an Weiterentwicklungen, welche einem Benutzer eine einfache vorzugsweise intuitive und komfortable bzw. sichere Steuerung bzw. Überprüfung eines Garprozesses ermöglichen.

Es ist daher die Aufgabe der vorliegenden Erfindung, einem Benutzer eine flexiblere und besonders komfortable Bedienung eines Kochfeldes zu ermöglichen.

Diese Aufgabe wird gelöst durch ein Kochsystem mit den Merkmalen des Anspruchs 1 und durch ein Verfahren zum Betreiben eines Kochsystems mit den Merkmalen des Anspruchs 6.

Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochsystem umfasst wenigstens eine Kochfeldeinrichtung und wenigstens ein Kochgeschirr, wobei die Kochfeldeinrichtung wenigstens eine Aufstellfläche für das Kochgeschirr und wenigstens eine Heizeinrichtung zum Beheizen des Kochgeschirrs sowie wenigstens eine Steuereinrichtung aufweist. Die Kochfeldeinrichtung umfasst weiterhin wenigstens eine Bedieneinrichtung und das Kochgeschirr umfasst wenigstens eine Bedieneinheit. Dabei stehen die Bedieneinrichtung und die Bedieneinheit in Wirkverbindung zu der Steuereinrichtung, sodass über die Bedieneinrichtung und die Bedieneinheit wenigstens ein Parameter für wenigstens einen Garprozess des Kochgeschirrs einstellbar ist.

Erfindungsgemäß wird unter einem Parameter beispielsweise eine Leistungsstufe, eine Betriebsart, die Zeit, eine Assistenzfunktion und/oder ein Automatikprogramm verstanden. Dabei kann wenigstens ein solcher Parameter für wenigstens einen Garprozess des Kochgeschirrs über die Bedieneinheit und/oder die Bedieneinrichtung eingestellt werden. Erfindungsgemäß kann an der Bedieneinrichtung eine Auswahl angezeigt werden, welche die Auswahl an der Bedieneinheit ergänzt oder es kann an der Bedieneinheit eine Auswahl angezeigt werden, welche die Auswahl an der Bedieneinrichtung ergänzt. Unter Auswahl wird ein Angebot an möglichen Bedienungen bzw. die gewählte Bedieneingabe verstanden. Dies können beispielsweise eine Leistungsstufe, eine Betriebsart, die Zeit, eine Assistenzfunktion und/oder ein Automatikprogramm sein.

Ergänzend oder alternativ ist erfindungsgemäß vorgesehen, dass wenigstens ein einzustellender oder eingestellter Parameter auf der Anzeigeeinrichtung der Bedieneinrichtung und/oder der Bedieneinheit anzeigbar ist. Dabei können insbesondere die einzustellenden oder eingestellte Parameter redundant bzw. gleichzeitig auf der Bedieneinrichtung und der Bedieneinheit angezeigt werden. Je nach Ausgestaltung können auch unterschiedliche Einstellmöglichkeiten auf den Anzeigeeinrichtungen der Bedieneinrichtung und/oder Bedieneinheit angezeigt werden. Insbesondere können auch auf einer Anzeigeeinrichtung die Auswahl einer Assistenzfunktion und auf der anderen Anzeigeeinrichtung Einstellmöglichkeiten zu einem manuellen Betrieb vorgegeben werden. Dabei ist insbesondere auch bevorzugt, dass auf einer Anzeigeeinrichtung die zuletzt ausgewählte Funktion angeboten wird bzw. ein Standby-Betrieb bzw. ein Bereitschaftsbetrieb angezeigt wird.

Das erfindungsgemäße Kochsystem bietet viele Vorteile. Ein erheblicher Vorteil ist, dass bei dem erfindungsgemäßen Kochsystem eine redundante bzw. alternative Bedienmöglichkeit bzw. redundante bzw. alternative Bedienbereiche für die Kochfeldeinrichtung bereitgestellt wird. So ist es insbesondere möglich, dass ein Kochprozess bzw. wenigstens ein Parameter zu einem Kochprozess direkt an dem Kochgeschirr und/oder an der Kochfeldeinrichtung eingestellt werden kann. So kann je nach Bedarf der Kochprozess über das Kochgeschirr und/oder direkt über das Kochfeld gesteuert bzw. eingestellt werden.

Die Entscheidung on die Anzeigen von Kochfeld und Kochgeschirr dasselbe anzeigen oder sich, insbesondere einseitig oder wechselseitig, ergänzen, kann durch eine Benutzervorwahl oder durch einen Betriebszustand von Kochfeld und/oder Kochgeschirr bestimmt sein.

Dabei kann die Verfügbarkeit der Einstellmöglichkeit bzw. das Anzeigen von Parametern auf der Bedieneinrichtung und/oder der Bedieneinheit je nach Ausgestaltung und/oder Situation vorteilhaft angepasst werden.

Bevorzugt umfasst die Bedieneinrichtung und/oder dass die Bedieneinheit wenigstens eine Anzeigeeinrichtung. Dabei kann eine solche Anzeigeeinrichtung insbesondere durch wenigstens ein Display zur Verfügung gestellt werden. Ein solches Display kann insbesondere mit einer Touch-Funktion ausgestattet sein, sodass über die Anzeigeeinrichtung die Bedienbarkeit bzw. wenigstens ein Bedienelement für die Bedieneinheit bzw. die Bedieneinheit zur Verfügung gestellt wird. Insbesondere ist eine solche Anzeigeeinrichtung als UI/UX-Eingabebereich ausgebildet.

In zweckmäßigen Ausgestaltungen ist die Aktivität der Bedieneinrichtung und/oder der Bedieneinheit anpassbar. Dabei kann je nach Situation vorzugsweise eine Steuerung der Kochfeldeinrichtung entweder mit dem einen oder mit der anderen oder auch mit beiden Bedienbereichen bzw. mit der Bedieneinheit und der Bedieneinrichtung erfolgen.

In vorteilhaften Weiterbildungen weist die Kochfeldeinrichtung wenigstens eine Topferkennungseinrichtung auf. Dabei wird mittels dieser Topferkennungseinrichtung die Topfposition bzw. die Position des Kochgeschirrs erkannt und vorzugsweise wird entsprechend ein Bedienbereich aktiviert. Die Aktivierung kann dann je nach erkannter Position und/oder Anzahl des erkannten Kochgeschirrs auf der Aufstellfläche unterschiedlich sein.

Bevorzugt ist wenigstens eine Assistenzfunktion in der Steuereinrichtung hinterlegt, welche über die Bedieneinrichtung und/oder die Bedieneinheit abrufbar ist. So kann ein Benutzer je nach Ausgestaltung über die Bedieneinrichtung und/oder die Bedieneinheit eine Assistenzfunktion bzw. ein Automatikprogramm aufrufen.

Bevorzugt sind auf der Bedieneinrichtung und/oder der Bedieneinheit Einstellbereiche für die Assistenzfunktion und/oder einen manuellen Betrieb vorgesehen. Dabei können diese Einstellbereiche insbesondere auf der Anzeigeeinrichtung einem Benutzer angeboten werden.

Das erfindungsgemäße Verfahren eignet sich zum Betreiben eines Kochsystems wie, es zuvor beschrieben wurde. Dabei wird wenigstens ein Parameter für wenigstens einen Garprozess eines Kochgeschirrs über die Bedieneinrichtung und/oder die Bedieneinheit eingestellt. Dabei wird ein an der Bedieneinrichtung und/oder an der Bedieneinheit einzustellender und/oder eingestellter Parameter von der Bedieneinrichtung und auch von der Bedieneinheit angezeigt. Vorzugsweise geschieht diese Anzeige an der Bedieneinrichtung und an der Bedieneinheit gleichzeitig oder simultan, zumindest mit einer Verzögerung von weniger als 1,5 Sekunden. Alternativ, insbesondere in Abhängigkeit eines Betriebszustandes des Kochfelds und/oder des Kochgeschirrs, wird an der Bedieneinrichtung eine Auswahl angeboten, welche die Auswahl an der Bedieneinheit ergänzt oder es wird an der Bedieneinheit eine Auswahl angeboten, welche die Auswahl an der Bedieneinrichtung ergänzt. Hierdurch können dem Benutzer bei hohem Bedienkomfort weitere Auswahloptionen bereitgestellt werden, insbesondere solche, die einen konkreten Bezug auf das Kochgeschirr oder das Kochfeld haben. Durch die redundante oder je nach Ausgestaltung bzw. Situation alternative Bedienmöglichkeit der Kochfeldeinrichtung über die Bedieneinrichtung und/oder die Bedieneinheit eine immer optimale und intuitive Bedienbarkeit der Kochfeldeinrichtung für einen Benutzer gewährleistet.

Bevorzugt wird auf der Anzeigeeinrichtung wenigstens ein einstellbarer oder einstellbarer Parameter angezeigt. So kann ein Benutzer sehr komfortabel einen Parameter für einen Kochprozess einstellen.

Besonders bevorzugt sind die Bedieneinrichtung und die Bedieneinheit während des Garprozesses beide aktiv. So können auf beiden Bedienbereichen die Einstellungen bzw. Einstellmöglichkeiten für den Garprozess angezeigt und/oder geändert werden.

Je nach Ausgestaltung ist bevorzugt nur die Bedieneinrichtung oder die Bedieneinheit aktiv. So kann beispielsweise je nach Situation ein Benutzer nur einer der beiden Bedienbereiche zur Verfügung gestellt werden.

In zweckmäßigen Weiterbildungen ist die Bedieneinrichtung und/oder die Bedieneinheit abhängig von der letzten Eingabe aktiv. So ist es insbesondere möglich, dass einem Benutzer nur der zuletzt verwendete Bedienbereich und/oder Einstellbereich angeboten wird. Der Wechsel bzw. die Freigabe von einem anderen Bedienbereich bzw. Einstellbereich kann je nach Ausgestaltung durch eine bestimmte Situation automatisch oder auch manuell über eine Einstellung an dem Kochgeschirr und/oder der Kochfeldeinrichtung erfolgen.

Bevorzugt ist über die Bedieneinrichtung und/oder die Bedieneinheit ein Wechsel zwischen einem manuellen Betrieb und einer Assistenzfunktion bzw. dem unterstützen Betrieb möglich. So ist es insbesondere möglich, dass ein Benutzer von einem automatischen Garprozess bzw. einem Garprozess mit Assistenzfunktion schnell und einfach über die Bedieneinrichtung und/oder die Bedieneinheit auf einen manuellen Betrieb umstellen kann, falls bestimmte eingestellte Parameter der Assistenzfunktion nicht zu dem jetzt gewünschten Zustand des Garprozesses passen.

Besonders bevorzugt erkennt die Kochfeldeinrichtung das Aufstellen eines Kochgeschirrs und aktiviert die Anzeigeeinrichtung und/oder einen Bereitschaftsmodus für die Bedieneinrichtung und/oder die Bedieneinheit. So kann durch eine geeignete Kommunikation zwischen der Kochfeldeinrichtung und dem Kochgeschirr eine besonders komfortabele Benutzung des Kochsystems für einen Benutzer bereitgestellt werden.

In zweckmäßigen Weiterbildungen wird vor dem Beginn eines Garprozesses ein Bereitschaftsmodus für die Bedieneinrichtung und/oder die Bedieneinheit aktiviert. Dabei ist es möglich, dass auf den beiden Bedienbereichen unterschiedliche Einstellmöglichkeiten vorgegeben werden. So ist es insbesondere möglich, dass auf der Bedieneinrichtung und der Bedieneinheit Einstellmöglichkeiten für eine Assistenzfunktion und den manuellen Betrieb vorgegeben werden. Es ist aber beispielsweise auch möglich, dass auf der Bedieneinrichtung und der Bedieneinheit unterschiedliche Einstellmöglichkeiten vorgegeben werden, wie beispielsweise in der Art, dass auf dem Kochgeschirr im Bereitschaftsmodus zunächst nur eine Assistenzfunktion gestartet werden kann, während über die Bedieneinrichtung der Kochfeldeinrichtung ein manueller Kochbetrieb oder auch beide Betriebsarten eingestellt werden können.

Bevorzugt hängt die Aktivität der Bedieneinrichtung und/oder Bedieneinheit von der Position des Kochgeschirrs auf der Aufstellfläche ab. Dabei kann insbesondere vorgesehen sein, dass die Einstellmöglichkeit für einen Garprozess eines Kochgeschirrs von der Bedieneinheit des Kochgeschirrs auf die Bedieneinrichtung der Kochfeldeinrichtung übergeht oder von Beginn an nur auf dieser angezeigt wird, wenn das Kochgeschirr weit hinten, also von dem Benutzer entfernt auf dem Kochfeld vorgesehen ist. Je nach Ausgestaltung könnte bei einem weiter hinten auf einer Kochfeldeinrichtung angeordneten Kochgeschirr das Steuern des Garprozesses über das Kochgeschirr bzw. über die Bedieneinheit unkomfortabler als über die Bedieneinrichtung der Kochfeldeinrichtung sein.

Besonders bevorzugt hängt die Aktivität der Bedieneinrichtung und/oder Bedieneinheit von wenigstens einem weiteren Kochgeschirr auf der Aufstellfläche ab. Dabei hängt die Bedienmöglichkeit für einen Benutzer insbesondere von dem Zustand und/oder der Position des weiteren Kochgeschirrs ab. Wenn beispielsweise ein Benutzer über einen anderen Topf hinübergreifen müsste, um die Bedieneinheit des Kochgeschirrs zu erreichen, kann je nach Position und Zustand des weiteren Kochgeschirrs die Einstellmöglichkeit von der Bedieneinheit des Kochgeschirrs auf die Bedieneinrichtung der Kochfeldeinrichtung übergehen. So wird insbesondere verhindert, dass ein Benutzer sich beim Übergreifen eines weiteren Kochgeschirrs an aus diesem Kochgeschirr austretenden Dampf verletzt. So kann insbesondere berücksichtigt werden, ob das weitere Kochgeschirr nur auf der Kochfeldeinrichtung aufsteht, oder ob dieses heiß ist bzw. ob Dampf austritt oder nicht. Hierfür können weitere Sensoren vorgesehen sein.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine rein schematische Darstellung eines Ausführungsbeispiels eines erfindungsgemäßen Kochsystems;
- Figur 2: eine rein schematische Darstellung eines weiteren Ausführungsbeispiels eines erfindungsgemäßen Kochsystems;
- Fig. 3: eine rein schematische Darstellung eines nächsten Ausführungsbeispiels eines erfindungsgemäßen Kochsystems; und
- Fig. 4: eine rein schematische Darstellung eines anderen Ausführungsbeispiels eines erfindungsgemäßen Kochsystems.

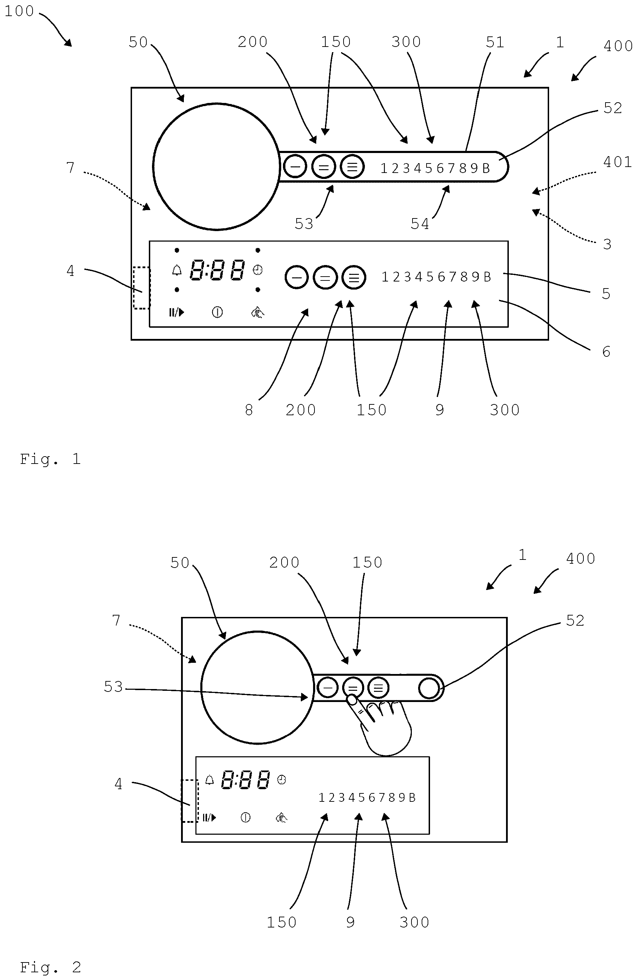

In Figur 1 ist rein schematisch ein erfindungsgemäßes Kochsystem 100 in einer Draufsicht dargestellt. Das erfindungsgemäße Kochsystem 100 umfasst dabei eine Kochfeldeinrichtung 1 und ein Kochgeschirr 50.

Die Kochfeldeinrichtung 1 ist dem hier gezeigten Ausführungsbeispiel als Induktionskochfeld 400 ausgebildet, wobei die Kochfeldeinrichtung 1 eine Aufstellfläche für Kochgeschirr 50, 60 aufweist. Unterhalb der Aufstellfläche 2 sind in dem hier gezeigten Ausführungsbeispiel mehrere Heizeinrichtungen 3 vorgesehen, welche bei dem hier gezeigten Induktionskochfeld 400 als Induktionsspulen 401 ausgebildet sind.

Die Kochfeldeinrichtung 1 umfasst weiterhin eine Steuereinrichtung 4, welche in dem hier gezeigten Ausführungsbeispiel in Wirkverbindung zu einer Bedieneinrichtung 5 steht. Die Bedieneinrichtung 5 umfasst eine Anzeigeeinrichtung 6, sodass auf der Anzeigeeinrichtung verschiedene Informationen und Einstellelemente bereitgestellt werden können.

Das Kochgeschirr 50 umfasst in dem hier gezeigten Ausführungsbeispiel eine Bedieneinheit 51 zum Steuern eines Garprozesses des Kochgeschirrs 50, wozu auch die Bedieneinheit 51 in dem gezeigten Ausführungsbeispiel in Wirkverbindung zu der Steuereinrichtung 4 steht.

Auch die Bedieneinheit 51 des Kochgeschirrs 50 umfasst eine Anzeigeeinrichtung 52, auf welcher verschiedene Informationen und Einstellmöglichkeiten angezeigt werden können.

Auf der Bedieneinrichtung 5 sind in dem hier gezeigten Ausführungsbeispiel zwei Einstellbereiche 8, 9 vorgesehen, wobei in dem Einstellbereich 8 Assistenzfunktionen 200 eingestellt bzw. angewählt werden können. In dem hier rechts von dem Einstellbereich 8 für die Assistenzfunktion 200 vorgesehenen Einstellbereich 9 können Parameter 150 für den manuellen Betrieb 300 eingestellt werden.

Eine gleiche Ausgestaltung ist auch bei der Bedieneinheit 51 des Kochgeschirrs 50 vorgesehen. Auch hier gibt es zwei Einstellbereiche, wobei der Einstellbereich 53 für das Einstellen bzw. Anwählen von Assistenzfunktion 200 vorgesehen ist und wobei der Einstellbereich 54 zum Einstellen von Parametern 150 für den manuellen Betrieb 300 vorgesehen ist.

In dem in Figur 1 dargestellten Ausführungsbeispiel sind die Bedieneinrichtung 5 und die Bedieneinheit 51 in einen Bereitschaftsmodus, in welchem beide Bedienbereiche zum Steuern bzw. Bedienen eines Garprozesses des Kochgeschirrs 50 aktiv sind. Dabei sind sowohl die Bedieneinrichtung 5 an der Kochfeldeinrichtung 1 aktiv, als auch die Bedieneinheit 51 des Kochgeschirrs 50.

So werden in dem hier gezeigten Ausführungsbeispiel in dem Bereitschaftsmodus alle Einstellmöglichkeiten parallel bzw. redundant angeboten. Dann kann ein Benutzer an dem Kochgeschirr 50 oder auch in der Kochfeldeinrichtung 1 sowohl zum Starten oder Einstellen eines Garprozesses die Assistenzfunktion oder auch den manuellen Betrieb wählen.

Je nach Ausgestaltung können hier auch unterschiedliche Einstellmöglichkeiten angeboten werden. Zum Beispiel ist es möglich, dass an dem Kochgeschirr 50 bzw. der Bedieneinheit 51 nur das Einstellen von Assistenzfunktion oder auch der Wechsel zu manuellen Betrieb 300 angeboten wird, wobei auf der Bedieneinrichtung 5 bzw. an der Kochfeldeinrichtung 1 sowohl der manuelle Betrieb 300 als auch die Assistenzfunktion 200 aufrufbar sind. Jede andere Möglichkeit der Anzeige von Einzelmöglichkeiten ist hier auch je nach Situation und Ausgestaltung möglich.

In Figur 2 ist rein schematisch dargestellt, dass einem Benutzer auf der Bedieneinrichtung 5 der Kocheinrichtung 1 nur die Auswahl bzw. Parameter 150 für den manuellen Betrieb 300 angeboten werden. Weiterhin wird hier dem Benutzer auf der Bedieneinheit 51 des Kochgeschirrs 51 nur der Einstellbereich 53 auf der Anzeigeeinrichtung 52 angeboten, welcher die Assistenzfunktion 200 umfasst. Weiterhin ist dem Benutzer die Möglichkeit gegeben, über eine entsprechende Schaltfläche "on/off" die Assistenzfunktion 200 zu beenden bzw. den Einstellbereich 54 für den manuellen Betrieb 300 freizugeben.

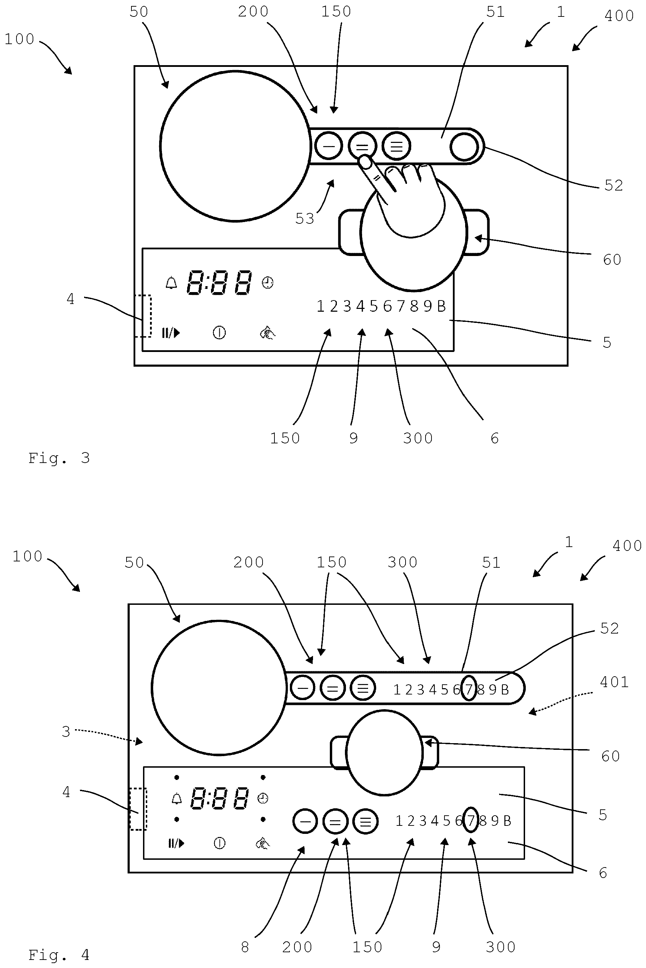

In Figur 3 ist rein schematisch dargestellt, dass es bei der Bedienung des Kochgeschirrs 50 bzw. beim Einstellen eines Parameters 150 an der Bedieneinheit 51 des Kochgeschirrs 50 zu einem Konflikt kommen kann bzw. dass die Bedienung über das Kochgeschirrs 50 ungünstig sein kann.

Dabei kann es wie in dem gezeigten Ausführungsbeispiel dargestellt vorkommen, dass das Kochgeschirr 50 relativ weit hinten auf der Aufstellfläche 2 vorgesehen ist. Dadurch kann das Erreichen der Bedieneinheit 51 einem Benutzer schwerfallen oder es kann unkomfortabel sein.

Zudem ist dargestellt, dass ein weiteres Kochgeschirr 60 auf der Aufstellfläche 2 aufstehen kann, welches vor dem Kochgeschirr 50 steht, an welchem über die Bedieneinheit 51 ein Parameter 150 eingestellt werden soll. Insbesondere wenn auch das weitere Kochgeschirr 60 beheizt wird und eventuell sogar Dampf aus diesem aufsteigt, kann das Einstellen von Parametern 150 über die Bedieneinheit 51 des hinteren Kochgeschirrs 50 problematisch sein.

Zum Erkennen der Topfposition des Gargeschirrs 50 oder auch zum Erkennen des weiteren Kochgeschirrs 60 ist in dem gezeigten Ausführungsbeispiel eine Topferkennungseinrichtung 7 vorgesehen, welche hier unterhalb der Aufstellfläche 2 vorgesehen ist. Diese Topferkennungseinrichtung 7 kann in beliebiger bekannter Ausgestaltung vorgesehen sein.

In Figur 4 ist rein schematisch dargestellt, wie die Problematik von weiterem aufgestellten Kochgeschirr 60 und/oder von einem ein weit hinten auf der Kochfeldeinrichtung 1 aufstehendem Kochgeschirr 50 umgangen werden kann.

So wird beim Erkennen einer ungünstigen Topfposition und/oder beim Erkennen eines ungünstigen weiteren Kochgeschirrs 60 die Anzeige auf der Bedieneinrichtung 5 und der Bedieneinheit 51 synchronisiert bzw. redundant ausgeführt, sodass ein Benutzer automatisch und unabhängig davon, ob die Bedieneinheit 51 oder die Bedieneinrichtung 5 zuvor aktiv war, beide Bedienbereiche benutzen kann. Je nach Ausgestaltung und Situation kann die Bedieneinheit 51 an dem Kochgeschirr 50 auch deaktiviert werden, sodass ein Benutzer nicht dazu verleitet wird, diese dennoch zu benutzen.

Es sind sowohl auf der Bedieneinrichtung 5 als auch auf der Bedieneinheit 51 in der gezeigten Ausführung die Einstellmöglichkeiten für Assistenzfunktionen 200 und den manuellen Betrieb 300 freigegeben und die aktuelle Einstellung der Leistungsstufe 7 ist durch die Hervorhebung auf beiden Bedienelementen markiert.

### Bezugszeichenliste

- 1: Kochfeldeinrichtung
- 2: Aufstellfläche
- 3: Heizeinrichtung
- 4: Steuereinrichtung
- 5: Bedieneinrichtung
- 6: Anzeigeeinrichtung
- 7: Topferkennungseinrichtung
- 8: Einstellbereich
- 9: Einstellbereich
- 50: Kochgeschirr
- 51: Bedieneinheit
- 52: Anzeigeeinrichtung
- 53: Einstellbereich
- 54: Einstellbereich
- 60: Kochgeschirr
- 100: Kochsystem
- 150: Parameter
- 200: Assistenzfunktion
- 300: manueller Betrieb
- 400: Induktionskochfeld
- 401: Induktionsspule

## Patentansprüche

1. Kochsystem (100) umfassend wenigstens eine Kochfeldeinrichtung (1) und wenigstens ein Kochgeschirr (50),
wobei die Kochfeldeinrichtung (1) wenigstens eine Aufstellfläche (2) für das Kochgeschirr (50) und wenigstens eine Heizeinrichtung (3) zum Beheizen des Kochgeschirrs (50) und wenigstens eine Steuereinrichtung (4) aufweist, wobei die Kochfeldeinrichtung (1) wenigstens eine Bedieneinrichtung (5) umfasst und wobei das Kochgeschirr (50) wenigstens eine Bedieneinheit (51) umfasst,
wobei die Bedieneinrichtung (5) und die Bedieneinheit (51) in Wirkverbindung zu der Steuereinrichtung (4) stehen und dass über die Bedieneinrichtung (5) und die Bedieneinheit (51) wenigstens ein Parameter (150) für wenigstens einen Garprozess des Kochgeschirrs (50) einstellbar ist, die Bedieneinrichtung (5) wenigstens eine Anzeigeeinrichtung (6) umfasst und die Bedieneinheit (51) wenigstens eine Anzeigeeinrichtung (52) umfasst,
**dadurch gekennzeichnet, dass**
wenigstens ein einzustellender und/oder eingestellter Parameter (150) auf der Anzeigeeinrichtung (6) der Bedieneinrichtung (5) und der selbe Parameter (150) gleichzeitig auf der Anzeigeeinrichtung (52) der Bedieneinheit (51) anzeigbar ist
und/oder
an der Bedieneinrichtung eine Auswahl angezeigt ist, welche die Auswahl an der Bedieneinheit ergänzt oder an der Bedieneinheit eine Auswahl angezeigt ist, welche die Auswahl an der Bedieneinrichtung ergänzt.

2. Kochsystem (100) nach einem der vorhergehenden Ansprüche, **dadurch gekennzeichnet, dass** die Aktivität der Bedieneinrichtung (5) und/oder der Bedieneinheit (51) anpassbar ist.

3. Kochsystem (100) nach einem der vorhergehenden Ansprüche, **dadurch gekennzeichnet, dass** die Kochfeldeinrichtung (1) wenigstens eine Topferkennungseinrichtung (7) aufweist.

4. Kochsystem (100) nach einem der vorhergehenden Ansprüche, **dadurch gekennzeichnet, dass** wenigstens eine Assistenzfunktion (200) in der Steuereinrichtung (4) hinterlegt ist, welche über die Bedieneinrichtung (5) und/oder die Bedieneinheit (51) abrufbar ist.

5. Kochsystem (100) nach einem der vorhergehenden Ansprüche, **dadurch gekennzeichnet, dass** auf der Bedieneinrichtung (5) und der Bedieneinheit (51) Einstellbereiche (8, 9, 53, 54) für die Assistenzfunktion (200) und/oder einen manuellen Betrieb (300) vorgesehen sind.

6. Verfahren zum Betreiben eines Kochsystems (100)
mit einem Kochsystem (500) umfassend wenigstens eine Kochfeldeinrichtung (1) und wenigstens ein Kochgeschirr (50),
wobei die Kochfeldeinrichtung (1) wenigstens eine Aufstellfläche (2) für das Kochgeschirr (50) und wenigstens eine Heizeinrichtung (3) zum Beheizen des Kochgeschirrs (50) und wenigstens eine Steuereinrichtung (4) aufweist, wobei die Kochfeldeinrichtung (1) wenigstens eine Bedieneinrichtung (5) umfasst und wobei das Kochgeschirr (50) wenigstens eine Bedieneinheit (51) umfasst, wobei die Bedieneinheit (51) wenigstens eine Anzeigeeinrichtung (52) umfasst,
wobei die Bedieneinrichtung (5) und die Bedieneinheit (51) in Wirkverbindung zu der Steuereinrichtung (4) stehen und dass über die Bedieneinrichtung (5) und die Bedieneinheit (51) wenigstens ein Parameter (150) für wenigstens einen Garprozess des Kochgeschirrs (50) einstellbar ist, wobei die Bedieneinrichtung (5) wenigstens eine Anzeigeeinrichtung (6) umfasst,
wobei wenigstens ein Parameter (150) für wenigstens einen Garprozess eines Kochgeschirrs (50) über die Bedieneinrichtung (5) und/oder die Bedieneinheit (51) eingestellt wird,
**dadurch gekennzeichnet, dass**
der an der Bedieneinrichtung (5) einstellbare und/oder eingestellte Parameter von der Bedieneinrichtung (5) und der Bedieneinheit (51) angezeigt wird
und/oder
der an der Bedieneinheit (51) einstellbare und/oder eingestellte Parameter von der Bedieneinrichtung (5) und der Bedieneinheit (51) angezeigt wird
und/oder
an der Bedieneinrichtung (5) eine Auswahl angeboten, welche die Auswahl an der Bedieneinheit (51) ergänzt oder es wird an der Bedieneinheit (51) eine Auswahl angeboten, welche die Auswahl an der Bedieneinrichtung (5) ergänzt.

7. Verfahren nach dem vorhergehenden Anspruch, **dadurch gekennzeichnet, dass** auf der Anzeigeeinrichtung (6, 52) wenigstens ein einstellbarer und/oder eingestellter Parameter (150) angezeigt wird.

8. Verfahren nach einem der beiden vorhergehenden Ansprüche, **dadurch gekennzeichnet, dass** die Bedieneinrichtung (5) und die Bedieneinheit (51) während des Garprozesses beide aktiv sind.

9. Verfahren nach einem der Ansprüche 6 bis 8, **dadurch gekennzeichnet, dass** die Bedieneinrichtung (51) oder die Bedieneinheit (51) aktiv sind.

10. Verfahren nach einem der Ansprüche 6 bis 9, **dadurch gekennzeichnet, dass** die Bedieneinrichtung (5) und/oder die Bedieneinheit (51) abhängig von der letzten Eingabe aktiv ist.

11. Verfahren nach einem der Ansprüche 6 bis 9, **dadurch gekennzeichnet, dass** über die Bedieneinrichtung (5) und/oder die Bedieneinheit (51) ein Wechsel zwischen manuellem Betrieb (300) und Assistenzfunktion (200) möglich ist.

12. Verfahren nach einem der Ansprüche 6 bis 11, **dadurch gekennzeichnet, dass** die Kochfeldeinrichtung (1) das Aufstellen eines Kochgeschirrs (50) erkennt und einen Bereitschaftsmodus für die Bedieneinrichtung (5) und/oder die Bedieneinheit (51) aktiviert.

13. Verfahren nach einem der Ansprüche 6 bis 12, **dadurch gekennzeichnet, dass** vor Beginn eines Garprozesses ein Bereitschaftsmodus für die Bedieneinrichtung (5) und/oder die Bedieneinheit (51) aktiviert wird.

14. Verfahren nach einem der Ansprüche 6 bis 13, **dadurch gekennzeichnet, dass** die Aktivität der die Bedieneinrichtung (5) und/oder der Bedieneinheit (51) von der Position des Kochgeschirrs (50) auf Aufstellfläche (2) abhängt.

15. Verfahren nach einem der Ansprüche 6 bis 14, **dadurch gekennzeichnet, dass** die Aktivität der Bedieneinrichtung (5) und/oder der Bedieneinheit (51) von wenigstens einem weiteren Kochgeschirr (60) auf der Aufstellfläche (2) abhängt.

## Claims

1. Cooking system (100) comprising at least one hob device (1) and at least one cookware item (50),
wherein the hob device (1) has at least one placement surface (2) for the cookware item (50) and at least one heating device (3) for heating the cookware item (50), and at least one control device (4),
wherein the hob device (1) comprises at least one operating device (5) and wherein the cookware item (50) comprises at least one operating unit (51),
wherein the operating device (5) and the operating unit (51) are operatively connected to the control device (4) and in that at least one parameter (150) for at least one cooking process of the cookware item (50) can be adjusted via the operating device (5) and the operating unit (51), the operating device (5) comprises at least one display device (6) and the operating unit (51) comprises at least one display device (52),
**characterised in that**
at least one parameter (150) that is to be adjusted and/or has been adjusted can be displayed on the display device (6) of the operating device (5) and the same parameter (150) can be displayed simultaneously on the display device (52) of the operating unit (51)
and/or
a selection is displayed on the operating device which supplements the selection on the operating unit or a selection is displayed on the operating unit which supplements the selection on the operating device.

2. Cooking system (100) according to any of the preceding claims,
**characterised in that** the activity of the operating device (5) and/or the operating unit (51) is variable.

3. Cooking system (100) according to any of the preceding claims,
**characterised in that** the hob device (1) has at least one pot detection device (7).

4. Cooking system (100) according to any of the preceding claims,
**characterised in that** at least one assistance function (200) is stored in the control device (4) which can be called up via the operating device (5) and/or the operating unit (51).

5. Cooking system (100) according to any of the preceding claims,
**characterised in that** adjustment regions (8, 9, 53, 54) for the assistance function (200) and/or a manual operation (300) are provided on the operating device (5) and the operating unit (51).

6. Method for operating a cooking system (100)
with a cooking system (500) comprising at least one hob device (1) and at least one cookware item (50),
wherein the hob device (1) has at least one placement surface (2) for the cookware item (50) and at least one heating device (3) for heating the cookware item (50), and at least one control device (4),
wherein the hob device (1) comprises at least one operating device (5) and wherein the cookware item (50) comprises at least one operating unit (51), wherein the operating unit (51) comprises at least one display device (52),
wherein the operating device (5) and the operating unit (51) are operatively connected to the control device (4) and in that at least one parameter (150) for at least one cooking process of the cookware item (50) can be adjusted via the operating device (5) and the operating unit (51), wherein the operating device (5) comprises at least one display device (6),
wherein at least one parameter (150) for at least one cooking process of a cookware item (50) is adjusted via the operating device (5) and/or the operating unit (51),
**characterised in that**
the parameter which is adjustable and/or has been adjusted on the operating device (5) is displayed by the operating device (5) and the operating unit (51)
and/or
the parameter which is adjustable and/or has been adjusted on the operating unit (51) is displayed by the operating device (5) and the operating unit (51)
and/or
a selection is offered on the operating device (5) which supplements the selection on the operating unit (51) or a selection is offered on the operating unit (51) which supplements the selection on the operating device (5).

7. Method according to the preceding claim, **characterised in that** at least one adjustable and/or adjusted parameter (150) is displayed on the display device (6, 52).

8. Method according to any of the two preceding claims,
**characterised in that** the operating device (5) and the operating unit (51) are both active during the cooking process.

9. Method according to any of claims 6 to 8, **characterised in that** the operating device (51) or the operating unit (51) are active.

10. Method according to any of claims 6 to 9, **characterised in that** the operating device (5) and/or the operating unit (51) are active depending on the last input.

11. Method according to any of claims 6 to 9, **characterised in that** a change between manual operation (300) and assistance function (200) is possible via the operating device (5) and/or the operating unit (51).

12. Method according to any of claims 6 to 11, **characterised in that** the hob device (1) detects the placement of a cookware item (50) and activates a ready mode for the operating device (5) and/or the operating unit (51).

13. Method according to any of claims 6 to 12, **characterised in that,** before the start of a cooking process, a ready mode for the operating device (5) and/or the operating unit (51) is activated.

14. Method according to any of claims 6 to 13, **characterised in that** the activity of the operating device (5) and/or the operating unit (51) depends on the position of the cookware item (50) on the placement surface (2).

15. Method according to any of claims 6 to 14, **characterised in that** the activity of the operating device (5) and/or the operating unit (51) depends on at least one further cookware item (60) on the placement surface (2).

## Revendications

1. Système de cuisson (100) comprenant au moins un dispositif formant plaque de cuisson (1) et au moins un ustensile de cuisson (50),
dans lequel le dispositif formant plaque de cuisson (1) présente au moins une surface de mise en place (2) pour l'ustensile de cuisson (50) et au moins un dispositif de chauffage (3) pour le chauffage de l'ustensile de cuisson (50) et au moins un dispositif de commande (4),
dans lequel le dispositif formant plaque de cuisson (1) comprend au moins un dispositif de manipulation (5) et dans lequel l'ustensile de cuisson (50) comprend au moins une unité de manipulation (51),
dans lequel le dispositif de manipulation (5) et l'unité de manipulation (51) sont en liaison fonctionnelle avec le dispositif de commande (4) **et en ce que,** par l'intermédiaire du dispositif de manipulation (5) et de l'unité de manipulation (51), au moins un paramètre (150) peut être réglé pour au moins un processus de cuisson de l'ustensile de cuisson (50), le dispositif de manipulation (5) comprend au moins un dispositif d'affichage (6) et l'unité de manipulation (51) comprend au moins un dispositif d'affichage (52),
**caractérisé en ce que**
au moins un paramètre (150) réglé et/ou à régler peut être affiché sur le dispositif d'affichage (6) du dispositif de manipulation (5) et le même paramètre (150) peut être affiché simultanément sur le dispositif d'affichage (52) de l'unité de manipulation (51)
et/ou
une sélection est affichée sur le dispositif de manipulation, laquelle complète la sélection sur l'unité de manipulation, ou une sélection est affichée sur l'unité de manipulation, laquelle complète la sélection sur le dispositif de manipulation.

2. Système de cuisson (100) selon l'une des revendications précédentes,
**caractérisé en ce que** l'activité du dispositif de manipulation (5) et/ou de l'unité de manipulation (51) peut être adaptée.

3. Système de cuisson (100) selon l'une des revendications précédentes, **caractérisé en ce que** le dispositif formant plaque de cuisson (1) présente au moins un dispositif de détection de casserole (7).

4. Système de cuisson (100) selon l'une des revendications précédentes, **caractérisé en ce qu'**au moins une fonction d'assistance (200) est enregistrée dans le dispositif de commande (4), laquelle peut être appelée par l'intermédiaire du dispositif de manipulation (5) et/ou de l'unité de manipulation (51).

5. Système de cuisson (100) selon l'une des revendications précédentes, **caractérisé en ce que** des zones de réglage (8, 9, 53, 54) pour la fonction d'assistance (200) et/ou un fonctionnement manuel (300) sont prévus sur le dispositif de manipulation (5) et l'unité de manipulation (51).

6. Procédé permettant de faire fonctionner un système de cuisson (100)
comportant un système de cuisson (500) comprenant au moins un dispositif formant plaque de cuisson (1) et au moins un ustensile de cuisson (50),
dans lequel le dispositif formant plaque de cuisson (1) présente au moins une surface de mise en place (2) pour l'ustensile de cuisson (50) et au moins un dispositif de chauffage (3) pour le chauffage de l'ustensile de cuisson (50) et au moins un dispositif de commande (4),
dans lequel le dispositif formant plaque de cuisson (1) comprend au moins un dispositif de manipulation (5) et dans lequel l'ustensile de cuisson (50) comprend au moins une unité de manipulation (51), dans lequel l'unité de manipulation (51) comprend au moins un dispositif d'affichage (52),
dans lequel le dispositif de manipulation (5) et l'unité de manipulation (51) sont en liaison fonctionnelle avec le dispositif de commande (4) **et en ce que,** par l'intermédiaire du dispositif de manipulation (5) et de l'unité de manipulation (51), au moins un paramètre (150) peut être réglé pour au moins un processus de cuisson de l'ustensile de cuisson (50), dans lequel le dispositif de manipulation (5) comprend au moins un dispositif d'affichage (6),
dans lequel au moins un paramètre (150) peut être réglé pour au moins un processus de cuisson d'un ustensile de cuisson (50) par l'intermédiaire du dispositif de manipulation (5) et/ou de l'unité de manipulation (51),
**caractérisé en ce que**
le paramètre réglé et/ou pouvant être réglé sur le dispositif de manipulation (5) est affiché par le dispositif de manipulation (5) et l'unité de manipulation (51)
et/ou
le paramètre réglé et/ou pouvant être réglé sur l'unité de manipulation (51) est affiché par le dispositif de manipulation (5) et l'unité de manipulation (51)
et/ou
une sélection est proposée sur le dispositif de manipulation (5), laquelle complète la sélection sur l'unité de manipulation (51), ou une sélection est proposée sur l'unité de manipulation (51), laquelle complète la sélection sur le dispositif de manipulation (5).

7. Procédé selon la revendication précédente, **caractérisé en ce qu'**au moins un paramètre (150) réglé et/ou pouvant être réglé est affiché sur le dispositif d'affichage (6, 52).

8. Procédé selon l'une des deux revendications précédentes,
**caractérisé en ce que** le dispositif de manipulation (5) et l'unité de manipulation (51) sont tous deux actifs pendant le processus de cuisson.

9. Procédé selon l'une des revendications 6 à 8, **caractérisé en ce que** le dispositif de manipulation (51) ou l'unité de manipulation (51) est actif.

10. Procédé selon l'une des revendications 6 à 9, **caractérisé en ce que** le dispositif de manipulation (5) et/ou l'unité de manipulation (51) sont actifs en fonction de la dernière entrée.

11. Procédé selon l'une des revendications 6 à 9, **caractérisé en ce qu'**un changement entre le fonctionnement manuel (300) et la fonction d'assistance (200) est possible par l'intermédiaire du dispositif de manipulation (5) et/ou de l'unité de manipulation (51).

12. Procédé selon l'une des revendications 6 à 11, **caractérisé en ce que** le dispositif formant plaque de cuisson (1) détecte la mise en place d'un ustensile de cuisson (50) et active un mode d'attente pour le dispositif de manipulation (5) et/ou pour l'unité de manipulation (51).

13. Procédé selon l'une des revendications 6 à 12, **caractérisé en ce que,** avant le début d'un processus de cuisson, un mode d'attente est activé pour le dispositif de manipulation (5) et/ou pour l'unité de manipulation (51).

14. Procédé selon l'une des revendications 6 à 13, **caractérisé en ce que** l'activité du dispositif de manipulation (5) et/ou de l'unité de manipulation (51) dépend de la position de l'ustensile de cuisson (50) sur la surface de mise en place (2).

15. Procédé selon l'une des revendications 6 à 14, **caractérisé en ce que** l'activité du dispositif de manipulation (5) et/ou de l'unité de manipulation (51) dépend d'au moins un autre ustensile de cuisson (60) sur la surface de mise en place (2).
